# DEMANDE DE BREVET EUROPEEN

(11) **EP 0 614 832 A1**
(43) Date de publication de la demande: **14.09.1994**
(21) Numéro de dépôt: 94400438.1
(22) Date de dépôt: 02.03.1994
(51) Int. Cl.: B65G 27/14

(54) **Procédé de transport d'une charge par plancher animé à va-et-vient, appareil mettant en oeuvre ce procédé, et caisse pour contenir une charge comportant un tel appareil**

(30) Priorité: 08.03.1993 FR 9302647
(71) Demandeur: MARREL, F-42160 Andrézieux-Bouthéon (FR)
(72) Inventeur: Claudinon, Jean-Louis, F-42160 Andrezieux Boutheon (FR); Chiron, Alain, F-42610 Saint Romain le Puy (FR)
(74) Mandataire: Rinuy, Santarelli

(57) **Abrégé**

Selon le procédé, le plancher est faiblement accéléré dans les courses aller, alors qu'il est fortement accéléré dans les courses retour, de sorte que la charge reposant sur le plancher (13) avance avec celui-ci dans chaque course aller, tandis que dans chaque course retour elle reste sur place ou à peu près. L'appareil mettant en oeuvre ce procédé peut notamment être utilisé dans une caisse (1) pour contenir une charge.

## Description

L'invention a trait au transport d'une charge par animation à va-et-vient du plancher sur lequel repose la charge.

On connaît déjà un appareil, appelé "walking floor", qui comporte un tel plancher qui est divisé en une pluralité de lames étroites disposées côte-à-côte et montées chacune à translation indépendamment des autres lames, l'ensemble des lames avançant conjointement dans la course aller (avancement de la charge), alors que la course retour (charge restant pratiquement immobile) se fait en plusieurs étapes dans chacune desquelles revient ou reviennent à la position initiale une ou plusieurs lame(s). Si par exemple le plancher est divisé en six lames, la course retour peut se faire avec une première phase où la première et la quatrième lames reviennent à la position initiale, puis avec une deuxième phase où ce sont la deuxième et la cinquième lames qui reviennent, et enfin une troisième phase pour les troisième et sixième lames.

La charge reposant sur le plancher est ainsi déplacée dans le sens de l'aller : du fait que dans la course aller la totalité des lames se déplace, le plancher a une quantité de surface mobile en contact avec la charge qui est suffisante pour qu'il n'y ait pas glissement, alors que dans la course retour la quantité de surface des lames mobiles est suffisamment faible pour que celle-ci puisse glisser par rapport à la charge, qui reste donc dans la course retour à peu près à l'endroit où elle était parvenue à la fin de la course aller.

L'invention vise notamment une façon plus simple de transporter une charge par animation à va-et-vient d'un plancher.

Sous un premier aspect, elle propose un procédé de transport d'une charge par plancher animé à va-et-vient, caractérisé en ce que :
- on utilise un plancher animé qui est monobloc et monté à translation sur une structure fixe de support ;
- on détermine la valeur d'accélération du plancher qui forme la limite prévisible entre des valeurs d'accélération suffisamment faibles pour que le frottement entre le plancher et la charge qu'il porte empêche qu'il y ait glissement entre la charge et le plancher, et des valeurs d'accélération suffisamment fortes pour qu'il y ait glissement ; et
- pour déplacer vis à vis de la structure de support la charge reposant sur le plancher, on anime le plancher d'un mouvement de translation à va-et-vient par rapport à ladite structure de support, avec dans chaque course aller des valeurs d'accélération dans le sens de l'aller qui restent inférieures à la valeur prédéterminée, et dans chaque course de retour des valeurs d'accélération supérieures à cette valeur prédéterminée, grâce à quoi la charge, vis à vis de la structure de support, se déplace globalement dans le sens aller, en avançant avec le plancher dans chaque course aller, alors que dans chaque course retour elle reste sur place ou à peu près.

On voit que le procédé selon l'invention est beaucoup plus simple à mettre en oeuvre puisque c'est la totalité du plancher qui est mis en mouvement tant dans la course aller que dans la course retour.

En outre, avec le procédé selon l'invention, la charge peut être constituée par des produits en vrac comportant des particules de petite dimension, tels que du sable ou des ordures ménagères, alors que dans le "walking floor" il est difficile de transporter de tels produits à cause des vides que crée dans le plancher le recul successif des lames pendant la course retour.

Selon des caractéristiques préférées, à la fin de chaque course aller, on freine le plancher avec une accélération dans le sens du retour qui est supérieure à ladite valeur prédéterminée.

On maximise ainsi le déplacement de la charge, car celle-ci, lorsqu'on freine, du fait de son énergie cinétique, glisse sur le plancher dans le sens de l'aller, jusqu'à ce que soit consommée cette énergie cinétique.

Selon d'autres caractéristiques préférées, dans chaque course aller, on accélère jusqu'à atteindre une vitesse préfixée, on garde ensuite celle-ci, puis on freine.

Ces caractéristiques permettent de mettre en oeuvre l'invention de façon particulièrement efficace lorsqu'il existe une vitesse maximum (vitesse préfixée) à laquelle peut se déplacer le plancher et que la longueur des courses du mouvement de va-et-vient fait que cette vitesse maximum peut être atteinte avec une accélération adéquate avant que ne soit venu le moment de freiner.

Selon d'autres caractéristiques préférées, dans chaque course retour, il y a une pluralité de cycles où on accélère jusqu'à atteindre une vitesse préfixée, après quoi en freine aussitôt.

Ces caractéristiques permettent de mettre en oeuvre l'invention lorsqu'il existe une vitesse maximum (vitesse préfixée) à laquelle peut se déplacer le plancher et que la longueur des courses du mouvement de va-et-vient est plusieurs fois supérieure à la distance qu'a parcouru le plancher lorsqu'il parvient à la vitesse maximum en ayant accéléré de façon adéquate.

Sous un deuxième aspect, l'invention propose un appareil transporteur à plancher animé à va-et-vient caractérisé en ce que ledit plancher animé est monobloc et monté à translation sur une structure fixe de support ; et caractérisé en ce que ledit appareil comporte des moyens d'entraînement à va-et-vient du plancher par rapport à la structure de support qui incorporent des moyens de contrôle de la vitesse dudit plancher pour que l'appareil fonctionne en mettant en oeuvre le procédé tel que précédemment exposé.

Selon des caractéristiques préférées de l'appareil conforme à l'invention, lesdits moyens d'entraînement à va-et-vient du plancher comportent un vérin hydraulique double effet disposé entre le plancher et la structure de support, une valve de commande du débit de fluide alimentant ledit vérin, et une unité de contrôle donnant à ladite valve de commande une consigne de débit variant en fonction du temps.

En tirant ainsi parti du fait que la vitesse d'un vérin hydraulique est proportionnelle au débit qui le traverse, on rend la mise en oeuvre des moyens d'entraînement particulièrement simple et commode.

En variante, lesdits moyens d'entraînement à va-et-vient du plancher comportent un moteur électrique linéaire dont l'inducteur et l'induit sont fixés respectivement à la structure de support et au plancher ou inversement, et une unité de contrôle en fonction du temps de l'énergie alimentant l'inducteur.

Selon d'autres caractéristiques préférées, lesdits moyens d'entraînement à va-et-vient du plancher comportent un accumulateur d'énergie.

On évite ainsi de surdimensionner la source de mouvement, l'énergie étant accumulée pendant la course aller et restituée pendant la course retour pour procurer les fortes accélérations.

Selon d'autres caractéristiques préférées, l'appareil conforme à l'invention comporte deux parois verticales fixes parallèles à la direction suivant laquelle ledit plancher est monté à translation, et disposées au-dessus dudit plancher respectivement d'un côté et de l'autre.

Ces caractéristiques sont utiles notamment pour les produits en vrac, qui sont ainsi transportés dans un canal à section en U dont le fond est formé par le plancher animé.

Sous un troisième aspect, l'invention propose une caisse pour contenir une charge, caractérisée en ce qu'elle comporte un appareil tel que celui qui vient d'être exposé, ledit plancher animé formant le fond de la caisse, celle-ci étant adaptée à être ouverte sur une face verticale transversale à la direction suivant laquelle ledit plancher est monté à translation.

L'invention permet ainsi de disposer d'une caisse, et en particulier d'une caisse adaptée à être transportée par un véhicule, qui est capable de se vider par elle-même en restant à l'horizontale. Cela présente de nombreux avantages, et notamment celui d'éviter le mécanisme et l'espace en hauteur nécessaire à un vidage de la caisse par inclinaison de celle-ci, et dans le cas où la caisse est portée par un véhicule, celui d'éviter d'exercer au cours du vidage de la caisse un poids supplémentaire sur l'essieu arrière, contrairement à ce qui se produit lorsqu'on vide la caisse en la faisant basculer autour d'un axe situé à l'arrière du véhicule. Le fait d'éviter ce poids supplémentaire sur l'essieu arrière est particulièrement intéressant lorsque le véhicule repose sur un sol meuble, par exemple celui d'un chantier ou d'une décharge.

Selon des caractéristiques préférées, pour des raisons de simplicité, de commodité et d'économie à la mise en oeuvre, ladite face verticale adaptée à être ouverte est un panneau arrière comportant au moins une porte et à sa base une fente par laquelle peut passer ledit plancher animé, le panneau avant opposé audit panneau arrière présentant également à sa base une fente par laquelle peut passer ledit plancher animé, celui-ci étant mobile entre une position avancée extrême où il comporte une portion en saillie vers l'avant au delà dudit panneau avant, et une position reculée extrême où il comporte une portion en saillie vers l'arrière au delà dudit panneau arrière.

L'exposé de l'invention sera maintenant poursuivi par la description d'exemples de réalisation, donnée ci-après à titre illustratif et non limitatif en référence aux dessins annexés, sur lesquels :
- la figure 1 est une vue en élévation avec arrachement partiel, prise depuis le côté droit d'une caisse conforme à l'invention ;
- la figure 2 en est une demi-vue prise de derrière, les portes arrière n'étant pas représentées ;
- la figure 3 est une vue schématique des moyens d'entraînement à va-et-vient du plancher de cette caisse ;
- la figure 4 montre de façon schématique comment se comporte la charge reposant sur le plancher pendant une course aller ;
- la figure 5 illustre d'une façon similaire comment elle se comporte pendant une course retour ;
- la figure 6 est une vue similaire à la figure 4, montrant une variante pour la course aller ;
- la figure 7 est une courbe montrant comment varie la vitesse du plancher en fonction du temps ;
- la figure 8 est une vue similaire à la figure 3, montrant une variante de réalisation avec un accumulateur d'énergie mécanique ; et
- la figure 9 montre de la même façon une variante avec un moteur électrique linéaire.

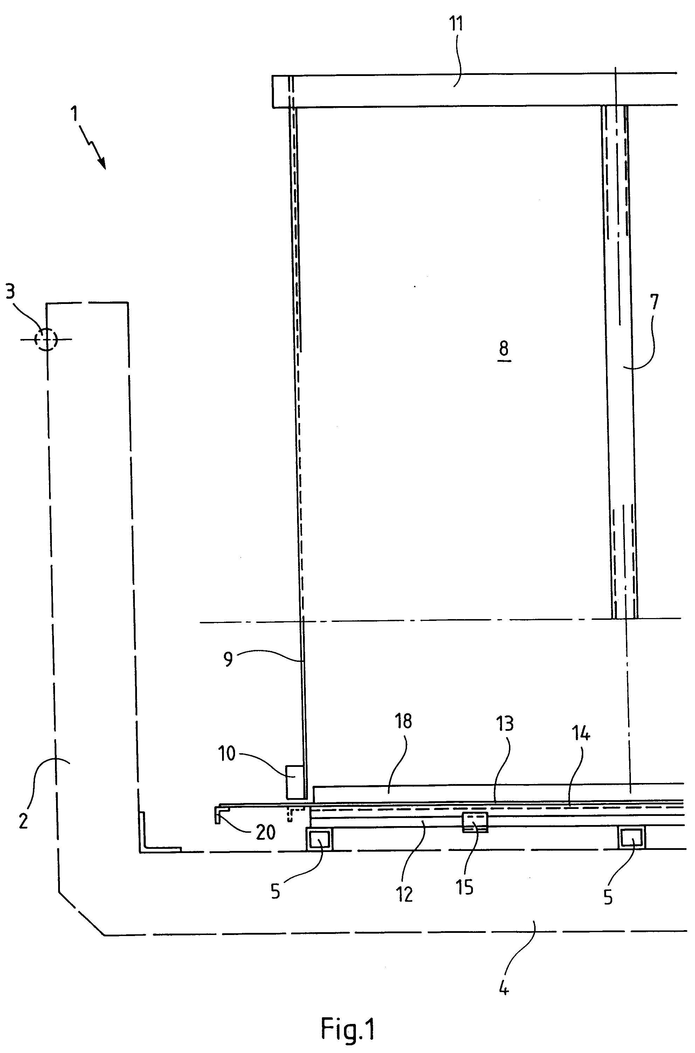

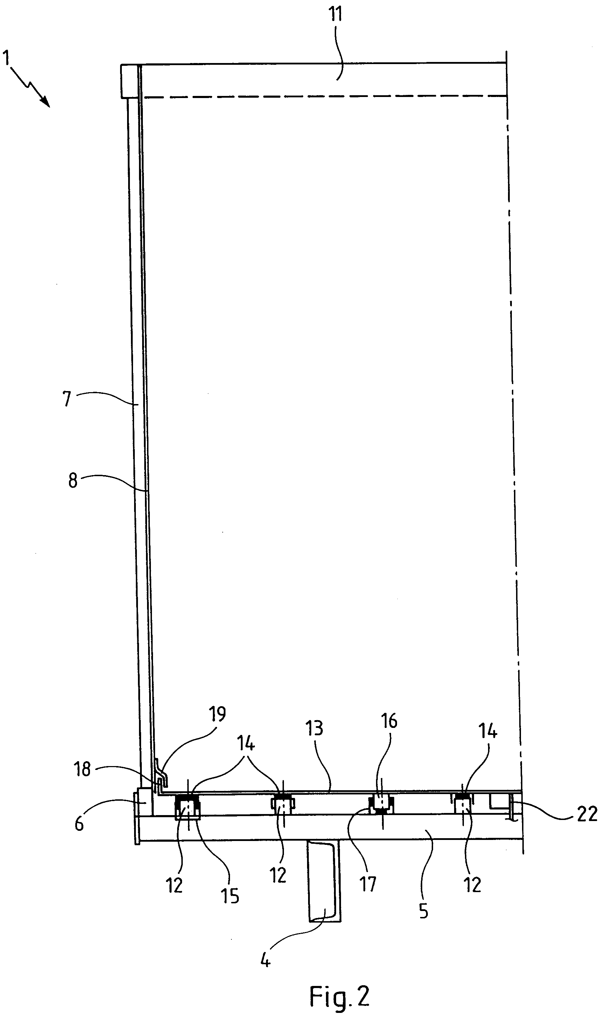

La caisse ou benne 1 montrée sur les figures 1 et 2 est prévue pour être transportée par un véhicule muni, pour prendre ou poser au sol sa charge, d'un appareil de levage à bras hydraulique tel que decrit dans FR-A-2.109.109 ou FR-A-2.185.520, c'est-à-dire un appareil comportant une potence qui présente à l'avant, en position de transport, un tronçon vertical ou à peu près au sommet duquel se trouve un crochet, alors qu'en position de prise ou de pose au sol le crochet se trouve derrière le véhicule à une hauteur lui permettant de s'engager avec ou de se dégager de l'anse de levage de la charge posée au sol derrière le véhicule.

La caisse 1 comporte ainsi une berce 2 normalisée (voir par exemple norme AFNOR NF R 17-108) avec une anse de levage 3 sur sa face avant, pour coopérer avec le crochet de l'appareil, et avec deux rails 4 respectivement droit et gauche sur une face inférieure, prévus chacun pour coopérer avec un galet que comporte l'appareil de levage à l'arrière du véhicule.

Sur la berce 2, et plus précisément sur les rails 4, sont soudées une pluralité de traverses 5 sur lesquelles est soudée à chaque extrémité une bordure latérale inférieure 6 à partir de laquelle s'étendent des montants 7 qui soutiennent une paroi verticale 8 formant respectivement le panneau droit ou le panneau gauche de la caisse 1. Celle-ci comporte également un panneau avant 9 présentant à sa base une bordure 10, le panneau arrière étant formé par deux portes, respectivement pour la moitié droite et pour la moitié gauche, chacune des portes étant articulée à l'arrière d'un panneau latéral 8. Une bordure 11 est prévue au sommet de chacune des parois verticales de la caisse 1 qui est ouverte sur le dessus, aucune paroi de toit n'étant prévue à l'intérieur de la bordure 11.

Les traverses 5 portent également, entre les bordures 6, une pluralité de longerons 12 dont les extrémités sont situées à peu près au niveau des parois avant et arrière de la caisse 1. Un plancher 13 monobloc et dont la surface supérieure est unie, est monté à translation par rapport au reste de la caisse suivant la direction longitudinale de celle-ci, par coopération avec les longerons 12, et plus précisément en reposant sur des patins de glissement 14 collés sur les longerons 12, des bagues 15 solidaires du plancher 13 et entourant les longerons 12 situés le plus à l'extérieur étant prévues à intervalle régulier, une barre longitudinale de guidage 16 solidaire du plancher 13 coopérant par l'intermédiaire de patins de glissement avec un profilé 17 en U soudé sur les traverses 5. Un rebord vertical 18 est prévu à chaque extrémité droite ou gauche du plancher 13, chaque rebord 18 étant engagé dans un guide 19 solidaire de la paroi 8 correspondante.

Ainsi qu'on le voit sur la figure 1, le panneau avant 9 présente à sa base une fente par laquelle peut passer le plancher 13, qui est mobile entre une position avancée extrême (trait plein) où il comporte une portion en saillie vers l'avant au delà du panneau avant 9, tandis qu'au delà de la face verticale arrière il ne présente pas de portion en saillie, et une position reculée extrême (voir représentation en trait interrompu de la cornière 20 située à l'extrémité avant du plancher, qui se trouve sous la bordure 10) où le plancher 13 comporte au delà du panneau arrière une portion en saillie vers l'arrière, une fente par laquelle peut passer le plancher 13 étant également prévue à la base du panneau arrière.

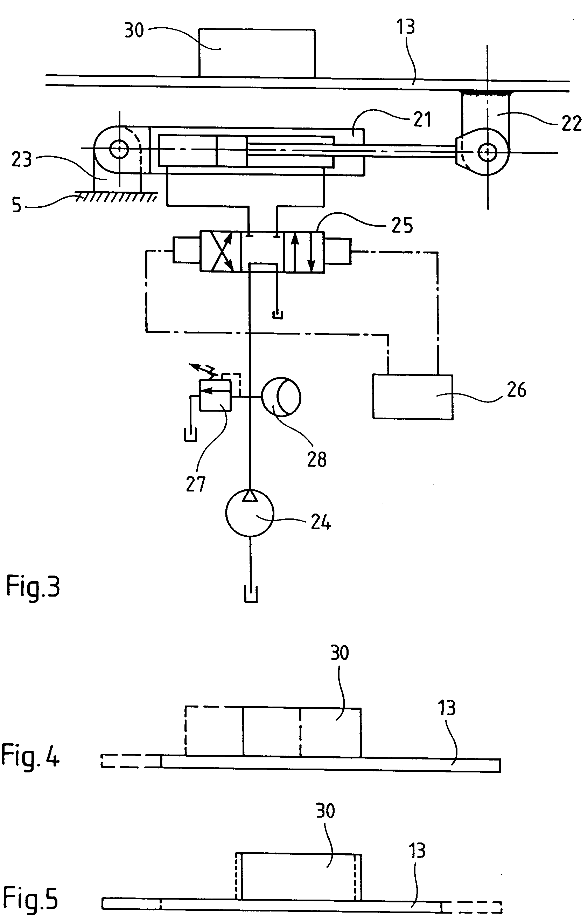

Le plancher 13 est prévu pour être animé vis à vis du reste de la caisse 1 d'un mouvement de translation à va-et-vient grâce aux moyens d'entraînement montrés schématiquement sur la figure 3. Ces moyens d'entraînement comportent un vérin hydraulique double effet 21 dont la tige est articulée à une chape 22 solidaire du plancher 13 (voir également figure 2) et dont le corps est articulé à une chape 23 solidaire de l'une des traverses 5. Le vérin 21 est alimenté grâce à une pompe 24 et à une servo-valve électrique 25 qui commande, en sens et en intensité, le débit de fluide dans le vérin 21, une unité de contrôle 26 étant prévue pour donner à la valve 25 une consigne de débit qui varie en fonction du temps. La conduite hydraulique entre la pompe 24 et la valve 25 communique avec un régulateur de pression 27 et avec un accumulateur d'énergie 28.

On va maintenant expliquer, à l'aide des figures 4 à 6, comment la charge 30 reposant sur le plancher 13 peut se déplacer par rapport au reste de la caisse 1 lors d'un aller-retour du plancher.

On notera préalablement, si a est le coefficient de frottement entre la charge 30 et le plancher 13, g l'intensité de la gravité du lieu et γ l'intensité de l'accélération du plancher 13, qu'il n'y aura pas glissement entre le plancher 13 et la charge 30 si γ est inférieur ou égal au produit de a par g, et qu'il y aura glissement si γ est supérieur à ce produit.

Sur la figure 4, la position du plancher 13 et de la charge 30 au début de la course aller (course où sort la tige du vérin 21) est représentée en trait interrompu alors que leur position à la fin de la course aller est représentée en trait plein. On voit qu'il n'y a pas eu de glissement entre le plancher et la charge, c'est-à-dire que l'intensité de γ, aussi bien dans le sens de la course aller (accélération) qu'en sens inverse (freinage) est restée inférieure ou égale au produit de a par g.

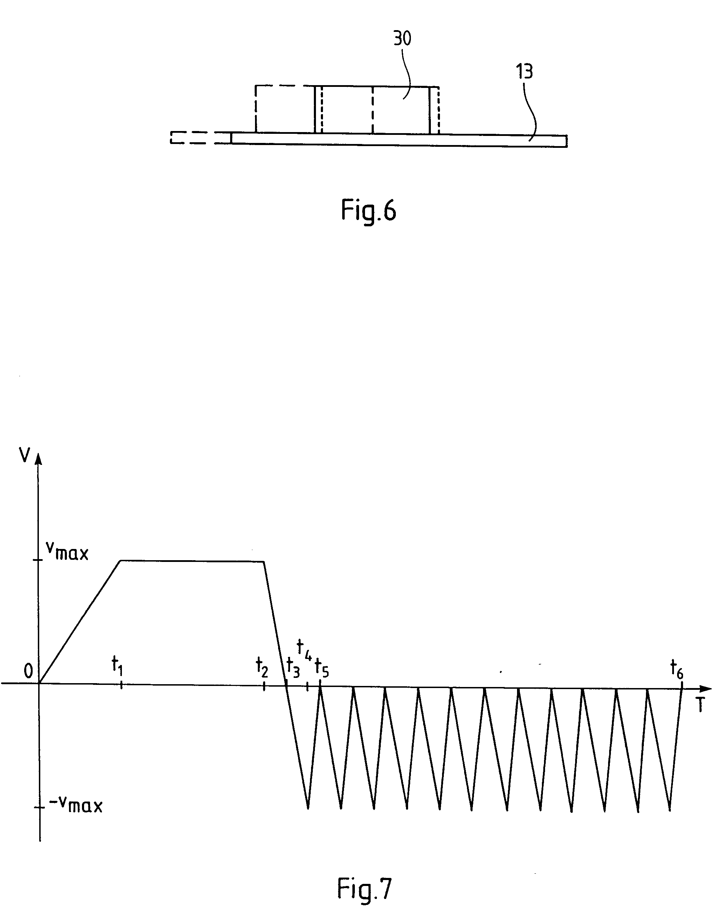

La figure 5 montre de la même façon la course retour (rentrée de tige du vérin 21). On voit qu'au contraire il y a eu glissement entre le plancher 13 et la charge 30, qui est restée sur place, ou alors s'est légèrement déplacée dans le sens de la course retour jusqu'à la position montrée en trait interrompu court : la course retour du plancher 13 s'est affectuée avec des valeurs de γ supérieures au produit de a par g, la charge 30 étant restée sur place ou à peu près à cause de son inertie.

On voit ainsi qu'au bout d'un va-et-vient complet, la charge 30 a progressé vers l'arrière de la caisse 1, c'est-à-dire dans le sens de l'aller.

La figure 6 montre une variante de la course aller où l'on a freiné avec une valeur de γ supérieure au produit de a par g. La charge 30 a donc glissé par rapport au plancher 13 lors du freinage, du fait de son énergie cinétique, jusqu'à la position montrée en trait interrompu court.

La figure 7 est une courbe montrant la vitesse souhaitée pour le plancher 13 en fonction du temps, ce dernier étant porté en abscisse tandis que la vitesse est portée en ordonné, les vitesses étant considérées comme positives quand elles sont dans le sens de l'aller (de l'avant vers l'arrière de la caisse 1).

On voit que la course aller dure entre les instants 0 et t₃, et que la course retour dure entre ce dernier instant et t₆. Lors de la course aller, on accélère entre les instants 0 et t₁, avec une accélération ayant une intensité très inférieure au produit de a par g, en t₁ on a atteint la vitesse maximale vₘₐₓ qu'est capable de supporter le vérin 21, et on garde cette vitesse maximale jusqu'à l'instant t₂, auquel on freine jusqu'à l'instant t₃ (vitesse nulle) avec une accélération (dans le sens du retour) dont l'intensité est supérieure au produit de a par g, on débute la course retour en gardant cette même accélération, la vitesse du vérin atteint l'intensité vₘₐₓ à l'instant t₄ auquel on freine aussitôt de sorte que l'intensité de l'accélération reste inférieure au produit de a par g, à l'instant t₅ la vitesse est à nouveau nulle, et l'on reproduit douze fois le cycle s'étant déroulé entre les instants t₃ et t₅, au bout de quoi on se trouve à l'instant t₆ où la course retour est terminée.

Dans l'exemple donné sur la figure 7, on a considéré, le plancher 13 étant en acier, qu'on avait : a = 0,2 ; et que vₘₐₓ = 0,3 m.s⁻¹, la course du vérin 21 étant égale à 0,45 m.

La durée totale de la course d'aller-retour (t₆) est de 4,80 s, avec t₁ = 0,6 s, t₂ = 1,65 s, t₃ = 1,80 s, t₄ = 1,95 s, et t₅ = 2,05 s.

On voit qu'entre les instants 0 et t₁, on a γ = 0,5 m.s⁻², ce qui est largement inférieur au produit de a par g ; et qu'entre t₂ et t₄, γ = 2 m.s⁻², ce qui est supérieur à ce produit.

L'unité de contrôle 26 donne à la servo-valve électrique 25 une consigne de débit en fonction du temps qui suit une courbe similaire à celle montrée sur la figure 7, la vitesse de déplacement de la tige du vérin 21 par rapport à son corps étant proportionnelle au débit qui le traverse.

En variante, la servo-valve électrique 25 est remplacée par un distributeur proportionnel, c'est-à-dire une valve dont la consigne en débit est fixée par la position du tiroir mobile.

La caisse 1 est prévue pour être remplie alors que le plancher 13 est dans la position avancée extrême et que les portes arrière sont fermées, le produit en vrac à transporter (par exemple du sable) étant déversé dans la caisse par le dessus. La caisse 1 peut être ainsi remplie alors qu'elle est en place sur un véhicule, ou bien pendant qu'elle est au sol, le chargement sur le véhicule s'effectuant ensuite. Pendant le transport, le plancher garde la même position que pendant le remplissage. Pour vider la caisse, on ouvre les portes arrière et on actionne le plancher 13 comme exposé précédemment, le produit contenu dans la caisse se déversant alors progressivement derrière celle-ci. Au cas où se trouve derrière la caisse un canal de guidage ayant une section similaire à celle de la caisse, l'actionnement du plancher 13 peut servir à alimenter ce canal avec un débit contrôlé. De tels canaux sont généralement appelés "trémies horizontales", même lorsqu'ils comportent un fond très légèrement incliné.

Dans une variante de réalisation, la caisse comporte un toit à l'intérieur de la bordure 11 (elle est fermée sur le dessus), et elle est remplie en étant accouplée, portes arrière ouvertes, à un compacteur de déchet qui pousse ceux-ci au fur et à mesure de leur dépôt à l'intérieur de la caisse. Lorsque celle-ci est pleine, on désaccouple le compacteur, on ferme les portes arrière, on charge la caisse sur le véhicule, et on l'amène jusqu'à un site de traitement des déchets où l'on vide la benne en la plaçant devant une trémie horizontale après avoir ouvert les portes arrières, puis en actionnant le plancher 13.

On notera qu'il est également possible de remplir la caisse 1 avec le plancher 13, la course aller s'effectuant dans le sens arrière vers avant (et non avant vers arrière), c'est-à-dire pendant la rentrée de tige du vérin 21 (et non sa sortie). On peut aussi effectuer un tassement des produits contre le panneau avant 9, voire (en sens inverse) contre le panneau arrière.

Dans une autre variante, la caisse peut être fixée en permanence sur le véhicule, au lieu d'être amovible comme la caisse 1.

On notera également qu'un appareil avec un plancher animé comme le plancher 13 peut également faire partie d'un simple plateau transporteur (sans parois verticales au dessus du plancher) pour transporter des colis ou des palettes, ou d'un canal d'avancement à section en U dont il constitue le fond.

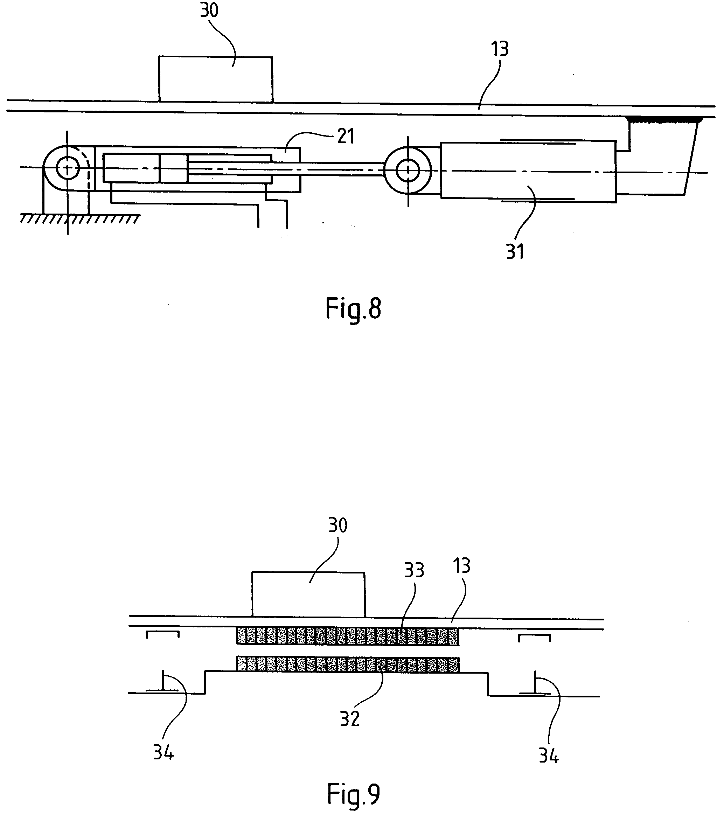

De nombreuses variantes sont possibles pour les moyens d'entraînement du plancher, ainsi dans la variante montrée sur la figure 8, l'accumulateur d'énergie n'est pas prévu dans le circuit hydraulique, mais est formé par un cylindre à ressort 31 disposé entre la tige du vérin 21 et le plancher 13.

Dans la variante montrée sur la figure 9, les moyens d'entraînement entre le plancher 13 et sa structure de support sont électriques au lieu d'être hydrauliques, un moteur linéaire étant prévu entre ceux-ci, avec l'inducteur 32 fixé sur la structure de support et l'induit 33 sur le plancher 13, l'énergie alimentant l'inducteur 32 étant contrôlée en fonction du temps par une unité appropriée. En variante, on peut placer l'inducteur sur le plancher 13 et l'induit sur la structure de support. Pour l'immobilisation du plancher 13, ainsi que pour son freinage, il est prévu des freins par électro-aimant 34.

On peut également prévoir des moyens d'entraînement purement mécaniques, notamment grâce à un système comportant des cames, des bielles et des leviers.

Dans d'autres variantes, le montage à translation du plancher se fait par des éléments de roulement (billes, rouleaux) plutôt que par des patins ; et la course retour s'effectue avec le nombre de cycles adéquat, ce nombre pouvant d'ailleurs être égal à 1 : il est fonction de la durée et de la longueur de course des mouvements de va-et-vient.

On peut également prévoir, pour piloter la valve de commande de débit (servo-valve 25, distributeur proportionnel), de tenir compte de la position du plancher 13, notamment en prévoyant un détecteur de fin de course aller et un détecteur de fin de course retour.

Par ailleurs, compte tenu du comportement de certains produits, il peut être utile de prévoir des surépaisseurs anti-retour sur la face supérieure du plancher 13, par exemple avec une section en triangle rectangle dont la pointe est située à l'avant si l'on veut déverser le produit à l'arrière.

On rappelle que l'invention ne se limite pas aux exemples décrits et représentés.

## Revendications

1. Procédé de transport d'une charge par plancher animé à va-et-vient, caractérisé en ce que :
- on utilise un plancher animé (13) qui est monobloc et monté à translation sur une structure fixe de support (4, 5, 12) ;
- on détermine la valeur d'accélération du plancher (13) qui forme la limite prévisible entre des valeurs d'accélération suffisamment faibles pour que le frottement entre le plancher (13) et la charge (30) qu'il porte empêche qu'il y ait glissement entre la charge et le plancher, et des valeurs d'accélération suffisamment fortes pour qu'il y ait glissement ; et
- pour déplacer vis à vis de la structure de support la charge reposant sur le plancher, on anime le plancher d'un mouvement de translation à va-et-vient par rapport à ladite structure de support, avec dans chaque course aller des valeurs d'accélération dans le sens de l'aller qui restent inférieures à la valeur prédéterminée, et dans chaque course de retour des valeurs d'accélération supérieures à cette valeur prédéterminée, grâce à quoi la charge, vis à vis de la structure de support, se déplace globalement dans le sens aller, en avançant avec le plancher dans chaque course aller, alors que dans chaque course retour elle reste sur place ou à peu près.

2. Procédé selon la revendication 1, caractérisé en ce qu'à la fin de chaque course aller, on freine le plancher avec une accélération dans le sens du retour qui est supérieure à ladite valeur prédéterminée.

3. Procédé selon l'une quelconque des revendications 1 ou 2, caractérisé en ce que, dans chaque course aller, on accélère jusqu'à atteindre une vitesse préfixée (vₘₐₓ), on garde ensuite celle-ci, puis on freine.

4. Procédé selon l'une quelconque des revendications 1 à 3, caractérisé en ce que, dans chaque course retour, il y a une pluralité de cycles où on accélère jusqu'à atteindre une vitesse préfixée (vₘₐₓ), après quoi en freine aussitôt.

5. Appareil transporteur à plancher animé à va-et-vient, caractérisé en ce que ledit plancher animé (13) est monobloc et monté à translation sur une structure fixe de support (4, 5, 12) ; et en ce que ledit appareil comporte des moyens d'entraînement à va-et-vient du plancher par rapport à la structure de support qui incorporent des moyens de contrôle de la vitesse dudit plancher (13) pour que l'appareil fonctionne en mettant en oeuvre le procédé selon l'une quelconque des revendications 1 à 4.

6. Appareil selon la revendication 5, caractérisé en ce que lesdits moyens d'entraînement à va-et-vient du plancher (13) comportent un vérin hydraulique double effet (21) disposé entre le plancher (13) et la structure de support (5), une valve (25) de commande du débit de fluide alimentant ledit vérin, et une unité de contrôle (26) donnant à ladite valve de commande une consigne de débit variant en fonction du temps.

7. Appareil selon la revendication 6, caractérisé en ce que ladite valve de commande de débit (25) est une servo-valve électrique.

8. Appareil selon la revendication 6, caractérisé en ce que ladite valve de commande de débit est un distributeur proportionnel.

9. Appareil selon la revendication 5, caractérisé en ce que lesdits moyens d'entraînement à va-et-vient du plancher (13) comportent un moteur électrique linéaire dont l'inducteur (32) et l'induit (33) sont fixés respectivement à la structure de support et au plancher ou inversement, et une unité de contrôle en fonction du temps de l'énergie alimentant l'inducteur.

10. Appareil selon l'une quelconque des revendications 5 à 9, caractérisé en ce que lesdits moyens d'entraînement à va-et-vient du plancher comportent un accumulateur d'énergie (28 ; 31).

11. Appareil selon l'une quelconque des revendications 5 à 10, caractérisé en ce qu'il comporte deux parois verticales fixes (8) parallèles à la direction suivant laquelle ledit plancher (13) est monté à translation, et disposées au-dessus dudit plancher respectivement d'un côté et de l'autre.

12. Caisse pour contenir une charge, caractérisée en ce qu'elle comporte un appareil selon la revendication 11, ledit plancher animé (13) formant le fond de la caisse (1), celle-ci étant adaptée à être ouverte sur une face verticale transversale à la direction suivant laquelle ledit plancher est monté à translation.

13. Caisse selon la revendication 12, caractérisée en ce que ladite face verticale adaptée à être ouverte est un panneau arrière comportant au moins une porte et à sa base une fente par laquelle peut passer ledit plancher animé, le panneau avant (9) opposé audit panneau arrière présentant également à sa base une fente par laquelle peut passer ledit plancher animé (13), celui-ci étant mobile entre une position avancée extrême où il comporte une portion en saillie vers l'avant au delà dudit panneau avant, et une position reculée extrême où il comporte une portion en saillie vers l'arrière au delà dudit panneau arrière.

14. Caisse selon l'une quelconque des revendications 12 ou 13, caractérisée en ce qu'elle est adaptée à être transportée par un véhicule.

15. Caisse selon la revendication 14, caractérisée en ce que ladite structure de support comporte une berce normalisée (2) avec une anse de levage (3) sur une face avant et deux rails (4) respectivement droit et gauche sur une face inférieure, ladite berce étant destinée à coopérer avec un appareil de levage à bras hydraulique monté sur ledit véhicule.
